# DEMANDE DE BREVET EUROPEEN

(11) **EP 2 444 915 A1**
(43) Date de publication de la demande: **25.04.2012**
(21) Numéro de dépôt: 10306061.2
(22) Date de dépôt: 30.09.2010
(51) Int. Cl.: G06F 21/00, G06K 19/073

(54) **Dispositif de saisie d'un chiffre à entrée sécurisée.**

(71) Demandeur: Gemalto SA, 92190 Meudon (FR)
(72) Inventeur: Gravez Pierre, 92197, Meudon (FR); Thill, Michel, 92197, Meudon (FR)
(74) Mandataire: Cour, Pierre

(57) **Abrégé**

L'invention permet de s'authentifier de manière sécurisée sur un dispositif électronique de petite dimension. L'invention est un dispositif électronique devant réaliser une authentification à l'aide d'un écran 10 et d'au moins une touche 31. Un circuit de contrôle 20 de saisie est relié à la touche 31 et à l'écran 10. Lors de chaque entrée de chiffre, le circuit de contrôle 20 génère un nombre aléatoire qu'il affiche sur l'écran 10 afin de l'incrémenter ou de le décrémenter à l'aide de la au moins une touche 31 pour obtenir un chiffre à saisir.

## Description

L'invention se rapporte à un dispositif de saisie d'un chiffre à entrée sécurisée. Plus particulièrement, l'invention se rapporte à un dispositif de petite dimension disposant d'un moyen pour entrer un code de manière sécurisée.

En matière de sécurisation d'accès, il est connu d'avoir une combinaison utilisant un objet et un secret. De manière classique les cartes à puce permettent d'assurer une telle sécurisation, l'objet est constitué par la carte à puce et le secret est constitué par un code PIN connu seulement de l'utilisateur autorisé. Un inconvénient des cartes à puce est la nécessité d'avoir un lecteur approprié qui soit lui-même sécurisé afin d'éviter l'interception du code par quelqu'un de malintentionné. A cause de cette obligation de lecteur dédié, l'utilisation des cartes à puce est peu utilisé pour les transaction électronique utilisant internet.

Une transaction électronique en ligne peut être sécurisée par l'utilisation de mots de passe utilisable une seule fois plus connu sous l'acronyme OTP (One Time Password). Les OTP peuvent être fournit à un utilisateur sous forme de liste ou à l'aide dispositif électronique de génération d'OTP. La liste ou le dispositif de génération électronique pouvant être volé, il est préférable d'avoir un dispositif de génération d'OTP qui soit lui-même sécurisé.

Il est connu par l'intermédiaire de prototype de démonstration montré lors de salon de réaliser sous la forme d'une carte bancaire une carte à puce disposant en outre d'une alimentation autonome, d'un écran et d'un clavier pour pouvoir générer un OTP uniquement après authentification par code PIN. Un inconvénient pour l'utilisation d'un clavier sur une carte à puce réside dans le marquage des touches. Après quelques usages, il devient possible de savoir quelles sont les touches utilisées pour le code PIN ce qui facile le piratage d'une telle carte.

Pour éviter d'avoir un clavier marqué, il est connu d'avoir recours à une saisie de code PIN utilisant une seule touche par incrémentation et/ou décrémentation d'une valeur de digit montré sur l'écran. Une telle méthode présente comme inconvénient de permettre à une personne malintentionnée de s'approprier le code en « écoutant » les clics produits par la touche unique.

L'invention propose une nouvelle solution permettant de s'authentifier de manière sécurisée sur un dispositif électronique de petite dimension. Plus particulièrement, l'invention est un dispositif électronique comportant un circuit de traitement auprès duquel une authentification est requise, un écran et au moins une touche. Le dispositif dispose en outre d'un circuit de contrôle de saisie relié à la touche et à l'écran. Lors de chaque entrée d'un chiffre, le circuit de contrôle génère un nombre aléatoire qu'il affiche sur l'écran afin de l'incrémenter ou de le décrémenter à l'aide de la au moins une touche pour obtenir un chiffre à saisir.

Selon différentes possibilités de réalisation, le dispositif peut comporter deux touches, l'une pour incrémenter et l'autre pour décrémenter. Le dispositif peut comporter au moins une touche de validation pour valider le chiffre saisi après incrémentation ou décrémentation. Par sécurité, seul le chiffre en cours de saisie peut être affiché.

Selon un autre aspect, l'invention est un procédé de saisie d'un code confidentiel composé d'au moins un chiffre à l'aide d'un écran et d'au moins une touche. Le procédé comporte les étapes de tirage d'un chiffre de manière aléatoire, d'affichage du chiffre précédemment tiré sur l'écran, et d'incrémentation ou décrémentation du chiffre à l'aide de la touche jusqu'à obtention du chiffre désiré.

De manière préférée, après validation du chiffre désiré, celui-ci peut être effacé et remplacé par un autre chiffre tiré de manière aléatoire afin de réaliser la saisie du chiffre suivant.

L'invention sera mieux comprise et d'autres particularités et avantage apparaîtront à la lecture de la description qui va suivre et à la vue des figures annexées parmi lesquelles :
- la figure 1 représente une mise en oeuvre simplifiée de l'invention, et
- la figure 2 représente une mise en oeuvre particulière de l'invention.

Comme indiqué précédemment l'invention vise un système de saisie de code sur un dispositif de petite dimensions tel que par exemple une carte à puce, ou encore une clef USB sécurisé ou n'importe quel type d'objet portable de sécurisation de type token sécurisé. Typiquement les dispositifs concernés peuvent être muni d'un ou plusieurs boutons-poussoirs et d'un écran. Une des utilisations est la génération d'OTP sur demande où l'on fournit un mot de passe à usage unique qui va être utilisé par l'utilisateur en le tapant sur le clavier d'un autre dispositif tel que par exemple un ordinateur connecté à internet.

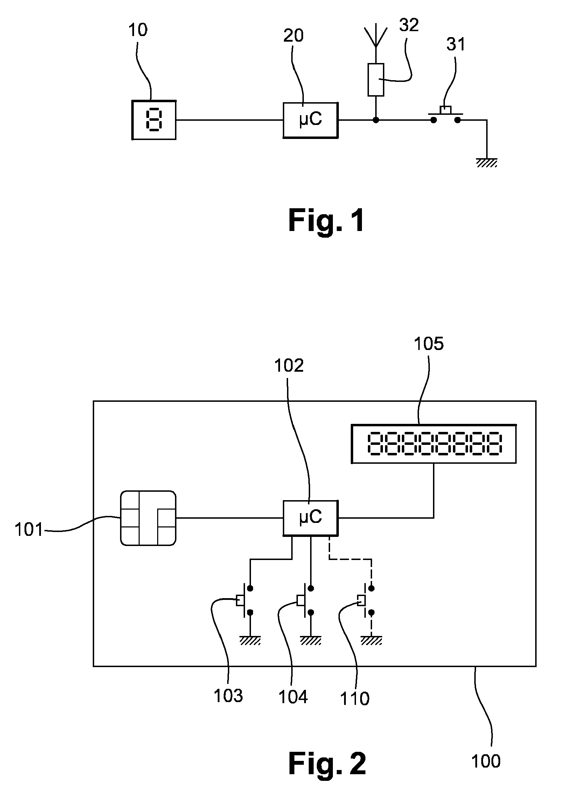

La mise en place d'une sécurisation par code PIN permet d'éviter en cas de perte du dispositif que celui-ci puisse être utilisé par un tiers non autorisé. L'invention propose un système d'entrée de code, détaillé de manière simplifiée en relation avec la figure 1. Le dispositif d'entrée de code de la figure 1 comporte un afficheur 10, un microcontrôleur 20 et une touche constituée d'un bouton poussoir 31 et d'une résistance 32 de tirage à un niveau logique haut. Pour l'explication du principe de l'invention l'afficheur 10 peut être un afficheur à un seul digit. Le microcontrôleur 20 est constitué d'un microprocesseur disposant d'une mémoire ayant un programme de mise en oeuvre et des interfaces d'entrée/sortie. Le bouton poussoir 31 est relié en série avec la résistance 32 entre la masse et la tension haute d'alimentation avec un point milieu relié à une entrée du microcontrôleur 20. L'appui sur le bouton poussoir 31 fourni un niveau logique zéro au microcontrôleur 20 et le non appui fournit un niveau logique un.

Selon le mode de réalisation simplifié, l'entrée d'un code PIN à quatre chiffres peut se dérouler ainsi :
Etape 1 : le microcontrôleur 20 effectue le tirage aléatoire d'un chiffre entre 0 et 9, ce chiffre correspond à la valeur temporaire du premier chiffre du code PIN et l'affiche sur l'afficheur 10.
Etape 2 : un utilisateur appui de manière brève sur le bouton poussoir 31, la détection d'un appui bref par le microcontrôleur est interprétée comme une demande d'incrémentation de la valeur temporaire, la valeur temporaire du premier chiffre est incrémentée d'une unité et elle est affichée sur l'afficheur 10.
Etape 3 : répétition de l'étape 2 jusqu'à ce que l'utilisateur voit apparaître la valeur du premier chiffre du code PIN sur l'afficheur 10, lorsque la valeur temporaire est arrivée à la valeur 9, l'incrémentation la fait repasser à 0.
Etape 4 : validation du premier chiffre à l'aide d'un appui long sur le bouton poussoir 31. Suite à la détection de l'appui long, le microcontrôleur mémorise la valeur temporaire comme étant la valeur du premier chiffre du code PIN à prendre en compte.
Etape 5 : le microcontrôleur 20 effectue le tirage aléatoire d'un chiffre entre 0 et 9, ce chiffre correspond à la valeur temporaire du deuxième chiffre du code PIN et l'affiche sur l'afficheur 10. Les étapes 2 à 4 sont répétées jusqu'à validation de la valeur du deuxième chiffre du code PIN.
Etape 6 : répétition de l'étape 5 pour obtenir les troisième et quatrième chiffres du code PIN.

A l'issu de l'étape 6, le code PIN est disponible dans le microcontrôleur 20 pour pouvoir être utilisé. L'homme du métier comprendra que l'utilisation de ce code PIN peut être relatif à différents usage. Egalement, quand on parle de tirage aléatoire, il va de soit qu'un générateur pseudo aléatoire peut aussi être utilisé. Dans le cas d'un générateur pseudo aléatoire, il convient de s'assurer que la probabilité de se retrouver avec deux fois de suite la même séquence de chiffres tirés aléatoirement est suffisamment faible pour que ce ne soit pas reproductible.

Il est à noter que différentes variantes de l'invention sont possibles. A titre indicatif, il est possible de décrémenter la valeur temporaire au lieu de l'incrémenter, dans ce cas il conviendra de repasser à la valeur neuf si l'on décrémente la valeur zéro. Qu'il s'agisse d'incrémentation ou de décrémentation, le fait de choisir aléatoirement la valeur de départ pour chaque chiffre du code PIN a pour effet que le nombre d'appui de touche à effectuer ne peut pas être le même sur deux entrées de code PIN successives.

Maintenant que le principe de base a été décrit, il convient de décrire un exemple de réalisation plus concret, tel que représenté sur la figure 2. La figure 2 représente une carte à puce 100, par exemple de type carte bancaire mais d'une génération disposant d'une alimentation autonome pour s'auto-alimenter sans avoir recours à un lecteur de carte.

La carte à puce 100 comporte une batterie (non représentée), un connecteur 101, un microcontrôleur 102, une touche de validation 103, Une touche de saisie 104, et un écran d'affichage 105. Les touches de validation 103 et de saisie 104 sont réalisé à l'aide de boutons poussoirs reliés directement entre la masse et des entrées du microcontrôleur 102. Le microcontrôleur 102 est par exemple relié au connecteur 101 afin d'échanger des données avec l'extérieur, notamment pour synchroniser une génération d'OTP avec un serveur distant. L'écran d'affichage 105 est relié au microcontrôleur 102. Dans la pratique, il est aussi possible d'avoir deux microcontrôleurs au lieu d'un, dans ce cas un des microcontrôleurs est un microcontrôleur sécurisé contenant des données et programmes sécurisés, par exemple pour du paiement bancaire, et le deuxième microcontrôleur sert uniquement à gérer l'affichage et la gestion de des touches de la carte.

La touche de validation103 est une touche multifonction. Un appui sur cette touche permet de réveiller le microcontrôleur et de remettre sous tension les différents éléments constitutif de la carte à puce 100. Un deuxième appui sur cette touche déclenche une demande de génération d'OTP qui déclenche une demande de saisie de code PIN avant génération de l'OTP. La saisie du code PIN s'effectue comme précédemment indiqué avec quelques aménagements liés à un écran d'affichage permettant une meilleure interface utilisateur.

La saisie du code PIN s'effectue en affichant par exemple « PIN ? » sur l'écran 105 et en affichant la valeur temporaire du premier chiffre. L'utilisateur peut agir sur la touche de saisie 104 pour incrémenter la valeur de ce chiffre, la validation se faisant en appuyant sur la touche de validation 103. Une fois le premier chiffre validé, une étoile peut le remplacé et la valeur temporaire du deuxième chiffre peut être affiché à coté de l'étoile et ainsi de suite jusqu'à la saisie des quatre chiffres du code PIN.

Lorsque le quatrième chiffre est validé, le code PIN est vérifié, si le code est bon alors le microcontrôleur 102 calcule un OTP et l'affiche sur l'écran 105. L'utilisateur peut alors l'utiliser en le recopiant sur une autre machine.

Il est à noter que les écrans LCD utilisé pour les cartes à puce sont assez directionnels pour la lecture et qu'il est difficile de lire dessus si l'on n'est pas en face. Le fait de n'afficher qu'un seul chiffre du code PIN rend beaucoup plus difficile à un tiers de lire le code sur l'écran, cela l'est d'autant plus que le bon chiffre est normalement affiché très peu de temps sur l'écran, juste le temps que l'utilisateur le valide. En outre, l'utilisation du tirage aléatoire pour chaque chiffre permet de rendre impossible la reproduction par « écoute » de la touche d'incrémentation.

Dans une variante, une deuxième touche de saisie 110 peut être rajoutée. Dans ce cas, la première touche de saisie 104 est utilisée pour incrémenter la valeur temporaire du chiffre en cours de saisie et la deuxième touche de saisie est utilisée pour décrémenter la valeur temporaire du chiffre en cours de saisie. Cela permet de réduire le nombre d'appui moyen par saisie de chiffre à 2,5 au lieu de 4,5. En outre utilisant deux boutons poussoir au lieu d'un on effectue donc environ quatre fois moins d'appui sur les bouton de saisie ce qui augmente la durée de vie des touches.

Dans une autre variante, La touche de validation peut aussi être utilisée comme vérification ou correction du chiffre précédent. La validation peut se faire avec un appui bref alors qu'un appui long signifie retour au digit précédent du code PIN. Dans le cas d'un retour au digit précédent, il est possible d'afficher soit la valeur précédemment enregistrée pour le digit considéré, soit de faire un tirage aléatoire pour recommencer la saisie du chiffre précédent.

## Revendications

1. Dispositif électronique comportant un circuit de traitement auprès duquel une authentification est requise, un écran (10, 105) et au moins une touche (31, 104), **caractérisé en ce que** le dispositif dispose d'un circuit (20, 102) de contrôle de saisie relié à la touche (31, 104) et à l'écran (10, 105) et **en ce que** lors de chaque entrée de chiffre, le circuit de contrôle (20, 102) génère un nombre aléatoire qu'il affiche sur l'écran (10, 105) afin de l'incrémenter ou de le décrémenter à l'aide de la au moins une touche (31, 104) pour obtenir un chiffre à saisir.

2. Dispositif selon la revendication 1, dans lequel le dispositif comporte deux touches (104, 110), l'une pour incrémenter et l'autre pour décrémenter.

3. Dispositif selon la revendication 1, dans lequel le dispositif comporte au moins une touche de validation (103) pour valider le chiffre saisi après incrémentation ou décrémentation.

4. Dispositif selon la revendication 1, dans lequel seul le chiffre en cours de saisie est affiché.

5. Dispositif selon la revendication 1, dans lequel le dispositif est une carte à puce.

6. Procédé de saisie d'un code confidentiel composé d'au moins un chiffre à l'aide d'un écran (10, 105) et d'au moins une touche (31, 104), **caractérisé en ce qu'**il comporte les étapes suivantes :
- tirage d'un chiffre de manière aléatoire,
- affichage du chiffre précédemment tiré sur l'écran (10, 105),
- incrémentation ou décrémentation du chiffre à l'aide de la touche (31, 104) jusqu'à obtention du chiffre désiré.

7. Procédé selon la revendication 6, dans lequel après validation du chiffre désiré, celui-ci est effacé et remplacé par un autre chiffre tiré de manière aléatoire afin de réaliser la saisie du chiffre suivant.
